# EUROPÄISCHE PATENTSCHRIFT

(11) **EP 2 238 042 B1**
(45) Veröffentlichungstag und Bekanntmachung des Hinweises auf die Patenterteilung: **23.11.2011**
(21) Anmeldenummer: 08870044.8
(22) Anmeldetag: 30.12.2008
(51) Int. Cl.: B65D 45/04

(54) **HAUSHALTSBEHÄLTER**
HOUSEHOLD CONTAINER
RÉCIPIENT DOMESTIQUE

(30) Priorität: 10.01.2008 CH 37082008; 31.07.2008 CH 12042008
(43) Veröffentlichungstag der Anmeldung: 13.10.2010
(73) Patentinhaber: Jovellar Martinez, Maria Jesus, 08950 Esplugas de Llobregat, Barcelona (ES)
(72) Erfinder: DIEFENBACH, Berndt, "verstorben" (ES)
(74) Vertreter: Schneider Feldmann AG Patent- und Markenanwälte
(86) Internationale Anmeldenummer: PCT/IB2008/003659
(87) Internationale Veröffentlichungsnummer: WO 2009/087473

(56) Entgegenhaltungen:
- CH-A- 181 130
- DE-C- 631 075

## Beschreibung

Die vorliegende Erfindung betrifft einen Haushaltsbehälter, bestehend aus einer Vorratsdose mit abnehmbarem Deckel, der mit einer verschliessbaren Dosierabgabeöffnung versehen ist.

Haushaltsbehälter der Eingangs genannten Art werden zum Aufbewahren von schüttbaren Gütern im Haushalt verwendet. Mehl, Gries, getrocknete Hülsenfrüchte und andere Lebensmittel in schüttbarer Form werden oftmals zum Verkauf in preiswerten Papiertüten verkauft. Solche Papiertüten eignen sich wenig um mehrmals geöffnet und geschlossen zu werden und zudem in ästhetischer Form aufbewahrt zu werden. Früher war es im Haushalt üblich, an der Wand montierte Gestelle zu haben, in denen solche Schüttgüter in Schubladen ähnlichen Behältnissen aufzubewahren, die entsprechend beschriftet waren. Heute sind solche Aufbewahrungsmöglichkeiten aus der Mode gekommen und stattdessen werden solche Schüttgüter in Haushaltbehälter untergebracht, die aus einer Vorratsdose bestehen und mit einem abnehmbaren Deckel versehen sind. Zur Entnahme der entsprechenden Lebensmittel wird der Deckel, der entweder als Schraubdeckel oder als Aufsteckdeckel konzipiert ist, abgenommen und die erforderliche Quantität abgegeben. Solche Deckel lassen sich gut auch hermetisch verschliessen. Nachteilig ist jedoch, dass solche Vorratsdosen relativ voluminös sind und gerade knapp mit einer Hand gehalten werden können und entsprechend der Grösse lassen sich kleinere Mengen aus solchen Vorratsdosen kaum dosierbar entleeren.

Entsprechend wurden Haushaltsbehälter der eingangs genannten Art entwickelt, bei denen der abnehmbare Deckel mit einer verschliessbaren Dosierabgabeöffnung versehen ist. Die US-A-4483450 zeigt beispielsweise eine Glasdose mit darauf aufgesetztem Deckel von dem ein Teilbereich wegklappbar ist. Eine solche Lösung ist zwar preiswert, doch verschliesst diese kaum hermetisch und entsprechend würden darin aufbewahrte Schüttgüter wie beispielsweise Zucker oder Salz, die relativ stark hygroskopisch sind, durch die verbleibenden Restöffnungen Feuchtigkeit aus der Umgebungsluft aufnehmen und entsprechend zum Verklumpen neigen.

Auf dem Markt sind auch Vorratsbehälter als Einwegsbehälter mit darauf aufgebrachtem Kunststoffverschluss bekannt, die mit einer Schwenkkappe verschliessbar sind. Der Scharnierverschluss weist entsprechend eine Tülle auf, aus dem der Inhalt des Vorratsbehältnisses entnommen werden kann. Ein solches Behältnis zeigt beispielsweise die FR-A-2752818. Für Vorratsdosen in denen Schüttgüter wie beispielsweise Mehl aufbewahrt werden, die zu einem gewissen Stocken neigen, sind solche Verschlüsse mit Ausgusstülle nicht geeignet, da die Tülle entsprechend zum Verstopfen neigt. Würde man hingegen die Ausgusstülle weglassen und eine einfache Ausgussöffnung vorsehen, so wäre die hermetische Verschliessbarkeit kaum noch gegeben.

Eine relativ komplizierte Lösung zeigt beispielsweise die EP-A-1566124. Der Deckel ist hier mit einem seitlichen Ausguss versehen und ist von oben mit einem drehbaren Ring ausgestaltet, an dem ein Verschliesselement angeformt ist, welches vor die Ausgussöffnung drehbar ist. Zudem hat der Deckel noch eine zentrische Öffnung, die zusätzlich durch einen Pfropfen verschliessbar ist. Diese zentrische Öffnung dient jedoch nicht zur Entnahme des Schüttgutes, sondern um den Vorratsbehälter nachzufüllen.

Eine ähnliche Lösung zeigt auch die EP-A-3643600. Hier ist eine Vorratsdose mit einem abnehmbaren Deckel gezeigt, in dem eine Dosierabgabeöffnung eingeformt ist. Über der Dossierabgabeöffnung ist eine drehbare Scheibe angeordnet mit einer Ausgussöffnung, die über der darunter liegenden Ausgussöffnung gedreht werden kann, um eine dosierte Abgabemöglichkeit zu realisieren. Neben dem, dass solche Deckel relativ komplex sind und auch nicht konzipiert sind für Behältnisse die zum jahrelangen Gebrauch geeignet sind und eine gewisse Ästhetik aufweisen sollen, sind auch solche Haushaltsbehälter mit den hier offenbarten Deckel mit verschliessbaren Dosierabgabeöffnungen kaum so realisierbar, dass die Dosierabgabeöffnung hermetisch verschlossen wird. Weiterhin zeigt die CH-181130 eine Tube mit einer Verschlusskappe, die mit einem Griff versehen ist, drehbar gelagert ist und eine Ausbuchtung aufweist, welche in der Schliessstellung der Kappe eine im Kopfstück der Tube angebrachte Austrittsöffnung abdeckt.

Schliesslich zeigt die DE-631075 noch einen Schwenkverschluss für Tuben mit einer aus elastischem Material bestehenden Kugel als Verschlussorgan. In ähnlicher Weise wie bei der CH-181130 dient die Kugel dazu, in der Schliessstellung des Schwenkverschlusses eine in einem kugelförmigen Verschlusskörper angebrachte Austrittsöffnung abzudecken.

Nachteilig bei den beiden letztgenannten Lösungen ist jedoch, dass diese Verschlüsse ungewollt leicht in die Schliessstellung rutschen können.

Es ist daher die Aufgabe der vorliegenden Erfindung, einen Haushaltsbehälter gemäss Oberbegriff des Patentanspruches 1 zu schaffen, bei dem ein ungewolltes Verschliessen erschwert ist.

Diese Aufgabe löst ein Haushaltsbehälter gemäss Oberbegriff des Patentanspruches 1, der sich dadurch auszeichnet, dass im kuppelförmigen Deckel eine Delle eingeformt ist, in der der Pfropfen in einer definierten Öffnungsstellung rastend unter Spannung des Bandes gehalten ist, wobei die Delle auf einer mittelsenkrechten Ebene zu der Geraden liegt, die durch die beiden diametral angeordneten Bandhaltemittel verläuft.

Weitere vorteilhafte Ausgestaltungsformen des Erfindungsgegenstandes gehen aus den abhängigen Patentansprüchen hervor und deren Bedeutung wird in der nachfolgenden Beschreibung mit Bezug auf die anliegenden Zeichnungen erläutert.

In der Zeichnung sind ein bevorzugte Ausführungsbeispiele des Erfindungsgegenstandes dargestellt. Es zeigt:
- Figur 1: eine Explosionszeichnung einer bevorzugten Ausführungsform des erfindungsgemässen Haushaltbehälters
- Figur 2: denselben Haushaltsbehälter im zusammengebauten Zustand, in einer offenen Stellung
- Figur 3: ein elastisches Band mit halbkugelförmigen Pfropfen mit angeformter Zuglasche,
- Figur 4: ein Detail des elastischen Bandes in einem Teilschnitt im grösseren Massstab,
- Figur 5: eine weitere Ausführungsform des erfindungsgemässen Haushaltbehälters mit einem Ringteil,
- Figur 6: eine Schnittdarstellung des Ringteils zur Ausführungsform gemäss Figur 5,
- Figur 7: eine weitere Ausführungsform des erfindungsgemässen Haushaltbehälters mit einem Ringteil und einem Ausgussschnabel,
- Figur 8: eine weitere Ausführungsform des erfindungsgemässen Haushaltbehälters mit einem Griff am Deckel, und
- Figur 9: eine weitere Ausführungsform der Befestigung des elastischen Bandes am Deckel in perspektivischer Darstellung und
- Figur 10: in einem diametralen Vertikalschnitt durch den Deckel

Der erfindungsgemässe Haushaltbehälter ist insgesamt mit 1 bezeichnet. Dieser Haushaltbehälter 1 besteht aus einer Vorratsdose 2, die ein- oder mehrteilig sein kann und einen abnehmbaren Deckel 3. Der abnehmbare Deckel 3 besitzt eine Dosierabgabeöffnung 6, die mittels eines Pfropfens 5, der an einem elastischen Band 4 gehalten ist, verschliessbar ist.

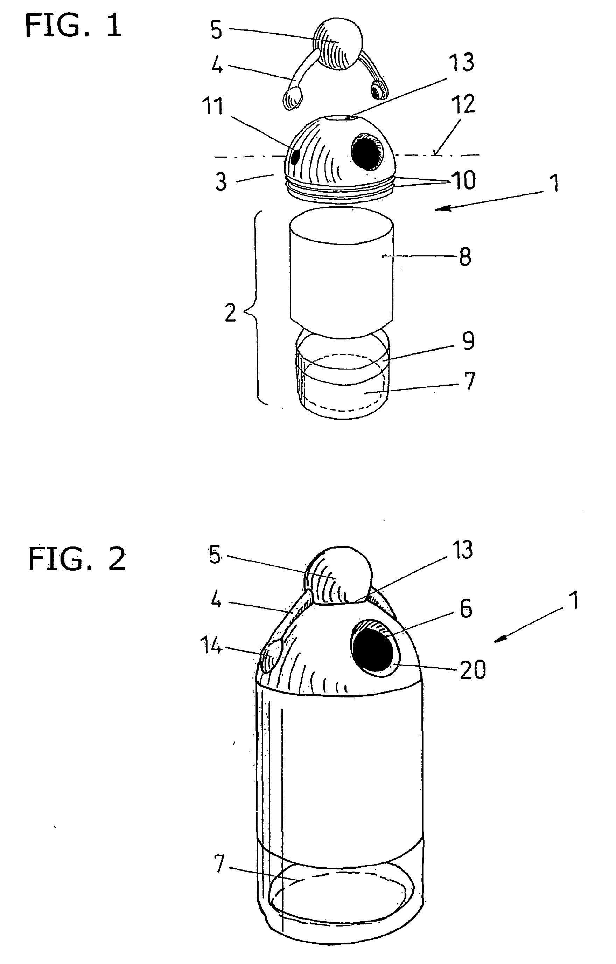

Da im Gegensatz zu einem Haushaltbehälter bei dem zur Entnahme des Schüttgutes immer der gesamte Deckel 3 entfernt wird und man so den Füllgrad der Vorratsdose 2 sieht, ist es hier erforderlich, dass die Vorratsdose 2 insgesamt oder zumindest im unteren Bereich transparent ausgestaltet ist. In der Ausführungsform gemäss der Figuren 1 und 2 ist entsprechend die Vorratsdose 2 zweiteilig gestaltet. Die Vorratsdose weist einen transparenten becherförmigen Teil 7 auf, der im oberen Randbereich mit einem Gewinde 9 versehen sein kann. Obwohl hier nicht dargestellt, lässt sich zusätzlich in diesem Bereich eine Ringdichtung vorsehen. Auf den becherförmigen transparenten Teil 7 lässt sich ein zylindrischer Teil 8 aufschrauben, der entsprechend ein zum Gewinde 9 passendes Innengewinde aufweist.

Die Verbindung zwischen dem becherförmigen, transparenten Teil 7 und dem zylindrischen Teil 8 kann auch unlösbar gestaltet werden, da an sich eine Lösbarkeit nicht zwingend erforderlich ist. So können diese beiden Teile auch verschweisst oder verklebt sein und somit auch eine hermetische Verbindung sicherstellen. Die Lösbarkeit der beiden Teile erleichtert lediglich die Reinigung der Vorratsdose 2.

Auf die Vorratsdose 2 lässt sich ein abnehmbarer Deckel 3 aufsetzen. Dieser Deckel 3 kann als Schraubdeckel oder als steckbarer Deckel mit form- und/oder kraftschlüssiger Verbindung gestaltet sein. Insbesondere können auch hier Dichtungsmittel vorgesehen sein, wie beispielsweise Dichtlippen 10, wie dies in der Figur 1 dargestellt ist. Der abnehmbare Deckel 3 ist kuppelförmig gestaltet. Die kuppelförmige Gestaltung des abnehmbaren Deckels 3 ist erforderlich um sicherzustellen, dass das elastische Band 4 mit dem der Pfropfen 5 gehalten ist am Deckel 3, in jeder Position und auch in jeder Zwischenposition die Spannung des elastischen Band sicherstellt.

Der kuppelförmige Deckel 3 weist zwei einander diametral gegenüberliegende Bandhaltemittel 11. Diese Bandhaltemittel liegen somit auf einer die Kuppel diametral durchstossende Gerade 12. im hier dargestellten Beispiel sind die Bandhaltemittel 11 Öffnungen.

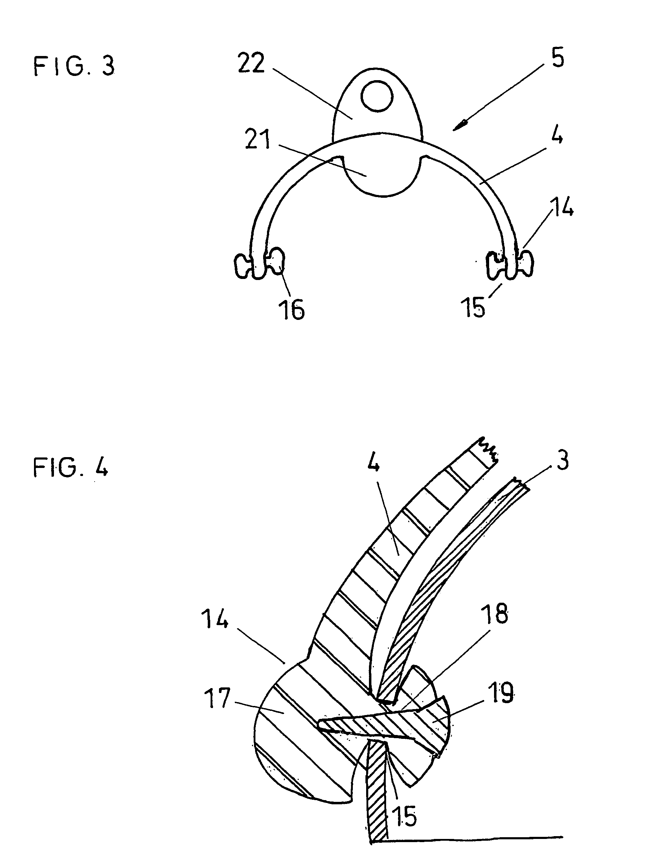

Auf einer mittelsenkrechten Ebene im Bezug auf die Strecke zwischen den beiden Bandhalteöffnungen 11 liegt in einem seitlichen Bereich die Dosierabgabeöffnung 6. Ferner kann der abnehmbare Deckel 3 mit einer im Zenit der Kuppel eingeformten Delle 13 versehen sein. Diese Delle 13 bildet eine definierte Offenposition, in der der Pfropfen 5 am elastischen Band 4 rastend liegen kann um sicherzustellen, dass er während der dosierten Abgabe des Schüttgutes nicht versehentlich vor die Dosierabgabeöffnung gelangt. An den Bandenden des elastischen Bandes 4 sind Formschlussmittel 14 vorhanden. Diese Formschlussmittel 14 können einstückig am elastischen Band 4 angeformt sein. Dies können zapfenförmig gestaltete Verdickungen sein, die eine umlaufende Taillierung 15 besitzen, wobei diese Taillierung im Durchmesser der Öffnung der Bandhaltemittel 11 angepasst sind. Sind diese Formschlussmittel 14 integraler Bestandteil des elastischen Bandes 4, so lassen sich diese Formschlussmittel 14 einfach eindrücken und gegebenenfalls zur Reinigung herausziehen. In der Ausführung gemäss der Figur 3, sind diese Formschlussmittel 14 aus zwei zusammenfügbaren Kunststoff- oder Metallteile gefertigt, die in zusammengedrückten Zustand ineinander einrasten. Bei einer solchen Verbindung wäre das elastische Band 4 nicht abnehmbar. Das elastische Band weist dann an den beiden Bandenden eine ösenförmige Durchgangsöffnung auf, so dass die zweiteiligen Lagerzapfen 16 diese Ösen im montierten Zustand durchsetzen.

In der Ausführungsform gemäss der Figur 4 ist ein einteiliger Lagerzapfen 17 gezeigt, der mit einer Taillierung 15 versehen ist. Dieser einteilige Lagerzapfen 17 ist integral am elastischen Band 4 angeformt und bildet eine weitere Ausgestaltungsform eines Formschlussmittels 14. Der Lagerzapfen 17 ist auf der im montierten Zustand innen liegenden Seite mit einem Sackloch 18 versehen, das soweit hineinreicht, dass das Sackloch 18 die Taillierung 15 durchsetzt. In das Sackloch 18 lässt sich dann ein Splint 19 einsetzen, der zur Sicherung des Lagerzapfens 17 dient. Dieser Splint 19 lässt sich aus einem unelastischen Kunststoff oder aus Metall fertigen.

Der Pfropfen 5 kann bevorzugterweise in der Gestalt einer Kugel einstückig mit dem elastischen Band 4 geformt sein. Insbesondere wird bevorzugterweise der Pfropfen 5 ebenfalls aus einem gummielastischen Material gefertigt, so dass er sich der Form der Dosierabgabeöffnung 6 vollständig anpasst und diesen hermetisch verschliesst. Entsprechend ist das elastische Band 4 ständig auf Zug belastet und drückt dem Pfropfen 5 auf die Dosierabgabeöffnung 6. Die Dosierabgabeöffnung 6 kann mit einem konischen, leicht sphärisch geformten Rand 20 versehen sein, um eine möglichst exakte dichte Lagerung des Pfropfens 5 auf die Dosierabgabeöffnung 6 zu erreichen.

Es ist aber auch durchaus möglich, den Pfropfen 5 vom elastischen Band 4 separat zu fertigen und erst nachträglich darauf anzubringen. In diesem Falle muss der Pfropfen 5 zweiteilig gefertigt sein und mit entsprechenden einrastenden Verbindungsmittel versehen sein. Die Wahl, welche Variante man diesbezüglich wählt, hängt im Wesentlich von den gewählten Materialen und den gewählten Herstellungsverfahren ab.

Schliesslich kann der Pfropfen 5 wie in der Figur 3 dargestellt, auch eine andere Form aufweisen. In der Variante gemäss der Figur 3 besteht der Pfropfen 5 aus einer Halbkugel 21, an dem eine Zuglasche 22 angebracht ist. Der erfindungsgemässe Haushaltbehälter 1 lässt sich nämlich nicht nur für trockene Schüttgüter verwenden, sondern sowohl auch liquide Schüttgüter wie Öl oder Essig, die man in entsprechenden Haushaltbehälter unterzubringen wünscht. Während bei der kugelförmigen Ausgestaltung des Pfropfen 5 diesen beim Öffnen über den kuppelförmigen Deckel 3 nach oben zum Zenit rollen kann, wo der Pfropfen 5 in die Delle 13 einrastet, ist dies bei liquiden Gütern weniger erwünscht, weil dadurch der abnehmbare Deckel 3 verschmiert werden würde. Durch die Lösung in dem der Pfropfen 5 beispielsweise eine zapfenförmige oder halbrunde Form aufweist und mit einer Zuglasche 22 versehen ist, lässt sich der Pfropfen 5 von der Dosierabgabeöffnung 6 abheben, verschwenken und in die Delle 13 setzen.

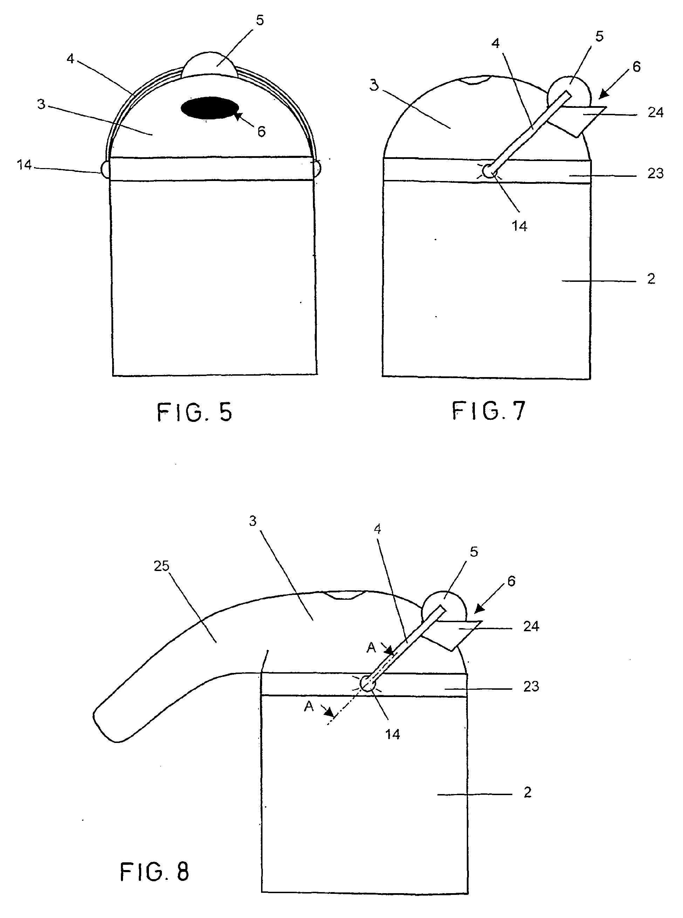

In der Ausführungsform gemäss der Figur 5 ist ein am Deckel 3 anbringbares Ringteil 23 gezeigt. Das elastische Band 4 ist am Ringteil 23 befestigt, wobei letzteres wie bei den vorhergegangenen Ausführungsbeispielen mittels Formschlussmitteln 14 oder bevorzugterweise einstückig erfolgen kann.

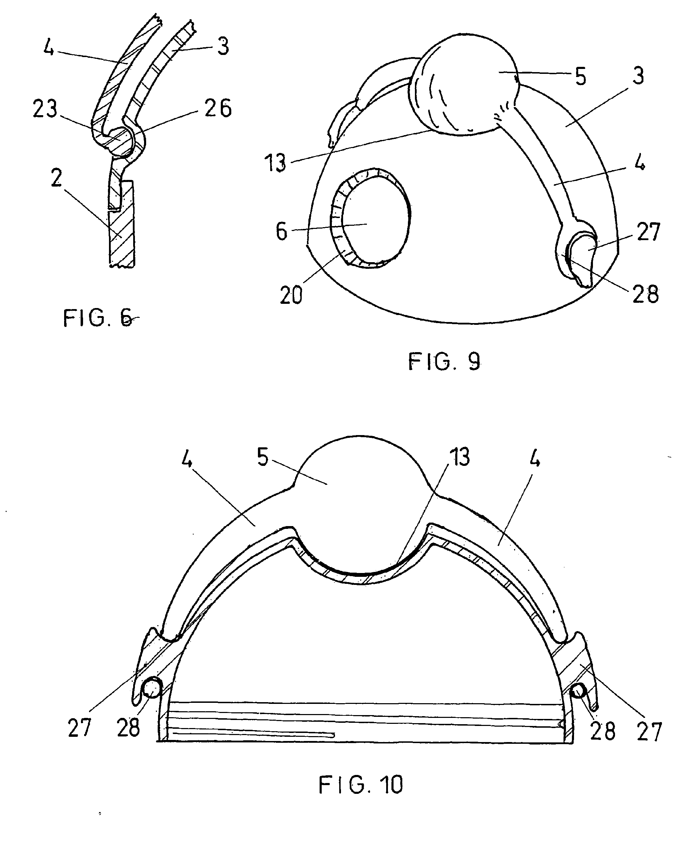

Die Fig. 6 zeigt eine mögliche Ausführungsform des Ringteils 23 in einer Teilschnittdarstellung. Der Ringteil 23 ist ein geschlossener Ring, der mit dem elastischen Band 4 einstückig gestaltet ist. Die Halterung des Ringteils 23 erfolgt form- und kraftschlüssig in einer umlaufenden Ringnut 26. Die Ringnut 26 kann wie hier (Figur 6) dargestellt im Deckel 3 eingeformt sein oder in gleicher Weise kurz unterhalb dem Deckel 3 in der Vorratsdose 2 eingeformt sein. Letzteres hat den Vorteil, dass der Deckel lediglich aufgesteckt sein kann und dadurch die Kombination des einteiligen Ringteiles 23 mit dem Band 4 zusätzlich verschliessend auf die Vorratsdose 2 gedrückt wird.

Die Einführung eines derart abnehmbaren Ringteiles 23 hat den Vorteil, dass der Verschluss leichter austauschbar oder ersetzbar ist und die Reinigungsfreundlichkeit verbessert wird.

Die Figur 7 zeigt noch eine weitere Ausführungsform des erfindungsgemässen Haushaltbehälters mit einem Ringteil 23 und einem Ausgussschnabel 24. Um die Ausschankeigenschaften zu verbessern, insbesondere um die Tropfsicherheit zu erhöhen, kann die Dosierabgabeöffnung 6 mit dem Ausgusschnabel 24 kombiniert werden. Dazu ist die Dosierabgabeöffnung 6 im Bereich des Ausgussschnabels 24 angeordnet.

Die Figur 8 zeigt noch eine weitere Ausführungsform bei der am Deckel 3 ein Griff 25 angeformt ist.

In einer besonders einfachen und preiswerten Lösung, wie in den Figuren 9 und 10 dargestellt, lassen sich auch direkt an dem Deckel 3, wie dargestellt, oder alternativ an der Vorratsdose 2 direkt pollerartige Zapfen 27 anformen. Bei der Anordnung am Deckel sind diese Zapfen 27 direkt einstückig angeformt, was spritzgusstechnisch mit einfachen Schiebern in der Spritzgussform realisierbar ist.

Bei dieser Version versieht man das elastische Band 4, wie bereits früher erwähnt, mit angeformten Ösen 28, die sich über die pollerarigen Zapfen stülpen lassen.

Der erfindungsgemässe Haushaltbehälter 1 ist somit nicht nur eine praktische hermetisch verschliessende Vorratsvorrichtung, sondern ein Haushaltbehälter dieser Art erlaubt sehr viele ästhetisch aussehende Varianten und Farbenkombinationen.

Beispielsweise ist es unter anderem auch möglich, auf eine Flasche aufsetzbare Verschlüsse dieser Art vorzusehen. So kann ein für den wiederholten Gebrauch relativ aufwendig zu handhabendes abnehmbares Verschlusselement, wie beispielsweise ein Verschlusszapfen, durch den erfindungsgemässen abnehmbaren Deckel ersetzt werden. Weiterhin kann die Dosierabgabeöffnung am abnehmbaren Deckel auch als Mundstück ausgebildet und als solches starr oder flexibel angeformt sein. Zudem kann bei allen Ausführungsformen am Pfropfen auch noch ein Ziehgriff zur Erleichterung der Bedienung (Öffnen und Verschliessen der Dosierabgabeöffnung) vorhanden sein.

### Bezugszeichenliste:

- 1: Haushaltsbehälter
- 2: Vorratsdose
- 3: abnehmbarer Deckel
- 4: elastisches Band
- 5: Pfropfen
- 6: Dosierabgabeöffnung
- 7: becherförmiger transparenter Teil
- 8: zylindrischer Teil
- 9: Gewinde
- 10: Dichtlippen
- 11: Bandhaltemittel
- 12: Gerade
- 13: Delle
- 14: Formschlussmittel
- 15: Taillierung
- 16: zweiteiliger Lagerzapfen
- 17: einteiliger Lagerzapfen
- 18: Sackloch
- 19: Splint
- 20: Rand
- 21: Halbkugel
- 22: Zuglasche
- 23: Ringteil
- 24: Ausgussschnabel
- 25: Griff
- 26: Ringnut
- 27: pollerartige Zapfen
- 28: Ösen

## Patentansprüche

1. Haushaltsbehälter (1) bestehend aus einer Vorratsdose (2) mit abnehmbarem Deckel (3), der mit einer mittels einem Verschluss verschliessbaren Dosierabgabeöffnung (6) versehen ist, wobei der Verschluss der Dosierabgabeöffnung (6) ein elastisches Band (4) mit einem Pfropfen (5) in Form einer Kugel oder Halbkugel ist, und wobei der Deckel (3) kuppelförmig gewölbt ist und dass das elastische Band (4) am Deckel (3) oder Behälter (2) so gehalten ist, dass der Pfropfen (5) unter Spannung des Bandes hermetisch dichtend auf der Dosierabgabeöffnung (6) aufliegt **dadurch gekennzeichnet, dass** im kuppelförmigen Deckel (3) eine Delle (13) eingeformt ist, in der der Pfropfen (5) in einer definierten Öffnungsstellung rastend unter Spannung des Bandes (4) gehalten ist, wobei die Delle (13) auf einer mittelsenkrechten Ebene zu der Geraden (12) verläuft, die durch die beiden diametral angeordneten Bandhaltemittel (11) verläuft.

2. Haushaltsbehälter nach Anspruch 1, **dadurch gekennzeichnet, dass** das elastische Band (4) an zwei Enden ein Formschlussmittel (14) aufweist, mittels dem das Band (4) in zwei einander diametral gegenüberliegenden Bandhaltemittel (11) im kuppelförmigen Deckel (3) kraft- und formschlüssig gehalten ist.

3. Haushaltbehälter nach Anspruch 2, **dadurch gekennzeichnet, dass** das Formschlussmittel (14) an den Bandenden je eine Verdickung ist mit einer Taillierung (15), die im Durchmesser dem Bandhaltemittel in der Form von der Bandhalteöffnung (11) angepasst ist.

4. Haushaltbehälter nach Anspruch 1, **dadurch gekennzeichnet, dass** der Pfropfen (5) die Form einer Halbkugel (21) hat und eine daran angeformte Haltelasche (22) besitzt.

5. Haushaltbehälter nach Anspruch 2, **dadurch gekennzeichnet, dass** die Formschlussmittel (14) an den Bandenden als Ösen (28) gestaltet sind, in den die Bandhaltemittel (11) eingreifen, wobei vorzugsweise die Ösen (28) einteilig an dem Band (4) angeformt sind.

6. Haushaltbehälter nach Anspruch 1, **dadurch gekennzeichnet, dass** ein am Deckel (3) oder am oberen Rand des Behälters (2) eine umlaufende Ringnut eingeformt ist, in die ein mit dem elastischen Band (4) einstückig geformtes Ringteil (23) form- und kraftschlüssig eingreifend lagert.

7. Haushaltbehälter nach Patentanspruch 1, **dadurch gekennzeichnet, dass** die Dosierabgabeöffnung (6) als Ausgussschnabel (24) gestaltet ist.

8. Haushaltbehälter nach Patentanspruch 1, **dadurch gekennzeichnet, dass** die Dosierabgabeöffnung (6) als Mundstück ausgebildet ist und starr oder flexibel am abnehmbaren Deckel (3) angeformt ist.

9. Haushaltbehälter nach Patentanspruch 1, **dadurch gekennzeichnet, dass** am Deckel (3) ein Griff (25) angeformt ist.

10. Haushaltsbehälter nach Patentanspruch 2, **dadurch gekennzeichnet, dass** das Bandhaltemittel (11) direkt am Deckel (3) oder am Behälter (2) angeformte, pollerartige Zapfen sind.

## Claims

1. Household container (1) consisting of a storage jar (2) with a removable lid (3) which is provided with a metering output opening (6) which can be closed by means of a closure, the closure of the metering output opening (6) being an elastic strip (4) with a stopper (5) in the form of a sphere or hemisphere, and the lid (3) being bulged in a domed-shaped manner and in that the elastic strip (4) is held on the lid (3) or container (2) such that the stopper (5) bears under tension of the strip in a hermetically sealed manner against the metering output opening (6), **characterised in that** in the dome-shaped lid (3) an indentation (13) is formed in which the stopper (5) is held in a defined open position in a latched manner under tension of the strip (4), the indentation (13) extending on a mean perpendicular plane relative to the straight line (12) which runs through the two diametrically arranged strip holding means (11).

2. Household container according to Claim 1, **characterised in that** the elastic strip (4) at two ends has a positive connection means (14) by means of which the strip (4) is held non-positively and positively in two diametrically opposing strip holding means (11) in the dome-shaped lid (3).

3. Household container according to Claim 2, **characterised in that** the positive connection means (14) is in each case a thickening at the strip ends with a waisted region (15) which is adapted in diameter to the strip holding means in the shape of the strip holding opening (11).

4. Household container according to Claim 1, **characterised in that** the stopper (5) has the shape of a hemisphere (21) and has a retaining tab (22) formed thereon.

5. Household container according to Claim 2, **characterised in that** the positive connection means (14) are formed on the strip ends as eyes (28) in which the strip holding means (11) engage, preferably the eyes (28) being integrally formed on the strip (4).

6. Household container according to Claim 1, **characterised in that** a peripheral annular groove is integrally formed on the lid (3) or on the upper edge of the container (2), and into which an annular part (23) integrally formed with the elastic strip (4) is engaged in a positive and non-positive manner.

7. Household container according to Claim 1, **characterised in that** the metering output opening (6) is designed as a pouring spout (24).

8. Household container according to Claim 1, **characterised in that** the metering output opening (6) is configured as a mouthpiece and is integrally formed on the removable lid (3) in a rigid or flexible manner.

9. Household container according to Claim 1, **characterised in that** a handle (25) is integrally formed on the lid (3).

10. Household container according to Claim 2, **characterised in that** the strip holding means (11) are bollard-type pins integrally formed directly on the lid (3) or on the container (2).

## Revendications

1. Récipient domestique (1) constitué d'une boîte de réserve (2) avec un couvercle amovible (3), qui est muni d'un orifice distributeur doseur (6) qui se ferme au moyen d'une fermeture, la fermeture de l'orifice distributeur doseur (6) étant une bande élastique (4) avec un bouchon (5) sous forme de sphère ou de demi-sphère et le couvercle (3) étant voûté en forme de coupole et la bande élastique (4) étant maintenue sur le couvercle (3) ou sur le récipient (2) de sorte que sous la tension de la bande, le bouchon (5) s'applique de façon hermétiquement étanche sur l'orifice distributeur doseur (6), **caractérisé en ce que** dans le couvercle (3) en forme de coupole est moulée une déformation (13) dans laquelle le bouchon (5) est maintenu par enclenchement dans une position d'ouverture définie, sous tension de la bande (4), la déformation (13) s'étendant sur un niveau médiateur par rapport à la droite (12) qui s'étend à travers les deux moyens de retenue de la bande (11) disposés de façon diamétrale.

2. Récipient domestique selon la revendication 1, **caractérisé en ce que** la bande élastique (4) comporte sur deux extrémités un moyen de complémentarité de forme (14) à l'aide duquel la bande (4) est maintenue par complémentarité de force et de forme dans deux moyens de retenue de la bande (11) diamétralement opposés l'un à l'autre dans le couvercle (3) en forme de coupole.

3. Récipient domestique selon la revendication 2, **caractérisé en ce que** le moyen de complémentarité de forme (14) sur les extrémités de la bande est chaque fois une surépaisseur avec un taillage (15), dont le diamètre est adapté au moyen de maintien de la bande, sous la forme de l'orifice de maintien de la bande (11).

4. Récipient domestique selon la revendication 1, **caractérisé en ce que** le bouchon (5) a la forme d'une demi-sphère (21) et comporte une patte de maintien (22) qui y est rapportée.

5. Récipient domestique selon la revendication 2, **caractérisé en ce que** les moyens par complémentarité de forme (14) sur les extrémités de la bande sont conçus sous forme d'oeillets (28), dans lesquels les moyens de maintien de la bande (11) s'engagent, les oeillets (28) étant de préférence rapportés en monobloc sur la bande (4).

6. Récipient domestique selon la revendication 1, **caractérisé en ce que** sur le couvercle (3) ou sur le bord supérieur du récipient (2) est ménagée une rainure annulaire périphérique, dans laquelle un élément annulaire (23) conformé en monobloc avec la bande élastique (4) est logé par complémentarité de forme et de force.

7. Récipient domestique selon la revendication 1, **caractérisé en ce que** l'orifice distributeur doseur (6) est conçu sous la forme d'un bec verseur (24).

8. Récipient domestique selon la revendication 1, **caractérisé en ce que** l'orifice distributeur doseur (6) est conçu sous la forme d'une anche et rapporté de façon rigide ou flexible sur le couvercle (3) amovible.

9. Récipient domestique selon la revendication 1, **caractérisé en ce qu'**une poignée (25) est rapportée sur le couvercle (3).

10. Récipient domestique selon la revendication 2, **caractérisé en ce que** le moyen de maintien de la bande (11) est constitué de tenons de type bollards, directement rapportés sur le couvercle (3) ou sur le récipient (2).
